# EUROPEAN PATENT APPLICATION

(11) **EP 3 396 330 A1**
(43) Date of publication of application: **31.10.2018**
(21) Application number: 17168778.3
(22) Date of filing: 28.04.2017
(51) Int. Cl.: G01D 21/00, G01S 5/00, G06Q 10/08

(54) **DEVICE DESIGNED FOR TRACKING AND MONITORING OF A TRAVELLING ASSET**

(71) Applicant: TRAXENS, 13013 Marseille (FR)
(72) Inventor: DEMARNE, Sébastien, 83640 ST ZACHARIE (FR); JABBOUR, Ziad, 13013 MARSEILLE (FR); FALLAH, Michel, 13400 AUBAGNE (FR); DARAGON, Pascal, 13850 GREAQUE (FR)
(74) Representative: Verriest, Philippe

(57) **Abstract**

Device (1) designed for tracking and monitoring of a travelling asset, comprising a mounting platform (2) with a device plug and play interface (6, 15, 19), further comprising at least one processing unit, and at least one internal sensor (7) and a communication mean, said device being configured to collect environment parameters measured by said at least one internal sensor (7), said mounting platform being configured to maintain the device (1) attached to the asset, and said device plug and play interface (6,15,19) being configured to exchange data with and connect to electrical power source from or through at least one peripheral device (3, 5).

## Description

### TECHNICAL FIELD OF INVENTION

This invention relates to the field of tracking and monitoring assets being transported, such as containers.

### BACKGROUND

Transport operators must be able to inform their customers, almost in real-time, not only on the geographical position of their assets during their transportation, but also on different parameters characterising the conditions of transportation, such as temperature, humidity, etc..., and on the possible occurrence of any event that can be critical for the customer. It must as well be possible for the operator or the customer to change remotely the status of the asset, for example the temperature setting.

The great number and variety of type of assets (dry or reefer containers, tanks, wagons, etc...), of the transporting platforms (maritime, terrestrial, fluvial or air), the huge extension of distances and territories to be crossed, require to optimise energy autonomy of devices designed to be installed on transported assets to collect and transmit requested information on these assets; it requires to develop specific communicating strategies and protocols, in order to save as much as possible available energy resources, and for security reasons as well. Indeed, once an asset has left its departure area, it can be weeks or months, before it arrives at its destination area, without anyone having the possibility to change or even recharge the batteries attached to the mobile devices.

The great number and variety of type of assets (dry or reefer containers, tank, cars, etc...) and of goods being carried, and conditions of installations of theses mobile devices for tracking and monitoring the assets, naturally leads to the development of mobile devices that has to be fixed to many different kinds of assets, and has to be connected to many different kinds of peripherals and sensors, either embedded or wireless. More specifically, assets can be classified into two categories : assets that have an independent source of energy (i.e. reefer), and assets that do not have any source of energy (i.e. dry). Another source of diversity to deal with comes from the need to exchange information with some devices belonging to certain assets (i.e. reefer). When the monitoring and tracking device is assigned to an asset having no independent source of energy, one option to avoid having to replace batteries will be to add a peripheral battery pack to complement internal energy resources of the monitoring device. This diversity of equipment and situations increases manufacturing, maintenance and logistic costs.

Present invention relates to a solution to the previous problems by designing a monitoring and tracking device with a mechanical, electrical and data interface configured for all kinds of assets, peripherals and sensors, connected by wire, or wireless.

### SUMMARY OF INVENTION

In order to achieve the objective, the present invention concerns a device designed for tracking and monitoring of a travelling asset, comprising a mounting platform with a device plug and play interface, further comprising at least one processing unit, and at least one internal sensor and a communication mean, said device being configured to collect environment parameters measured by said at least one internal sensor, said mounting platform being configured to maintain the device attached to the asset, and said device plug and play interface being configured to exchange data with and connect to electrical power source from or through at least one peripheral device.

According to an aspect of the invention, the device designed for tracking and monitoring of a travelling asset is configured to implement an identification process with peripheral device to identify the peripheral device connected to device.

According to an aspect of the invention, the peripheral device can be either a peripheral battery or a reefer's control unit peripheral adapter, or an external control unit peripheral adapter.

According to an aspect of the invention, the device plug and play interface comprises a male part and a female part mechanically paired together with at least one protrusion on one part cooperating with at least one complementary groove on the other part.

According to an aspect of the invention, the device plug and play interface further comprises a male part and a female part electrically paired together with at least one male connector on one part cooperating with at least one female connector on the other part.

According to an aspect of the invention, the device plug and play interface implements a communication protocol that uses electrical wiring to simultaneously carry both data and power current.

According to an aspect of the invention, the device is waterproof and the plug and play interface is protected against corrosion.

According to an aspect of the invention, the at least one internal sensor comprises a light sensor configured to detect light inside the asset through the device plug and play interface, when no peripheral device is connected to the device.

According to an aspect of the invention, the at least one internal sensor comprises a GPS.

According to an aspect of the invention, the device plug and play female interface comprises a transparent window.

According to an aspect of the invention, the device further collects environment parameters measured by at least one external sensor, based on a pairing mechanism that links the at least one external sensor to the device using a wireless communication protocol comprising at least one wake-up phase and one registration phase followed by a phase of updating of registered sensor data.

According to an aspect of the invention, the communication mean is a wireless telecommunication mean.

The present invention also concerns a peripheral device designed to cooperate with the device according to the invention, comprising a peripheral plug and play interface configured to cooperate with the device plug and play interface, and further configured to be protected against corrosion.

According to an aspect of the present invention, the peripheral device further comprises a peripheral battery configured to implement an identification process with the device to which it is connected through peripheral and device plug and play interfaces, and delivering full electrical power to the device through the same peripheral and device interface according to the result of the identification process.

According to an aspect of the present invention, the peripheral device further comprises a peripheral adaptor configured to implement an identification process with the device to which it is connected through peripheral's plug and play interface and device's plug and play interface, and to cooperate with a reefer's control unit or with an external control unit according to the result of the identification process.

According to an aspect of the present invention, cooperating with a reefer's control unit or with an external control unit comprises providing to the device status data from reefer's control unit or from an external control unit, and providing to the device reefer's electrical power source or an external power source.

According to another aspect of the present invention, the device connected to a peripheral device is configured to issue control commands to reefer's control unit according to the brand and type of reefer.

According to another aspect of the present invention, the device is connected to a peripheral device and further comprises a cellular communication module to communicate data, said device being configured to select external power source when the cellular communication module is active.

According to another aspect of the present invention, the device is connected to a peripheral device and configured to give priority to external power source over any other electrical power source.

According to another aspect of the present invention, the device is connected to a peripheral device and configured to increase communication and reporting frequency after being connected to external power source.

The present invention also concerns a device plug and play interface for connecting a device to a peripheral device, comprising a pair of electrical contacts lodged inside a female part, configured to cooperate with electrical contacts attached to a male part when the male part is inserted into the female part, the male part being maintained inside by a nut configured to cooperate with the threaded external envelope of the female part.

According to another aspect of the present invention, the device plug and play interface comprises a first female part having a first cylindrical threaded external envelope with a first diameter and a first cylinder axis, and further comprising a second part having a second cylindrical threaded external envelope with a second diameter and a second cylinder axis, the first and the second cylinder axis being having identical extension directions and being separated by a given distance.

According to another aspect of the present invention, the first and the second diameter are comprised between 24 mm and 27 mm, and the given distance is comprised between 79 mm and 81 mm.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which:

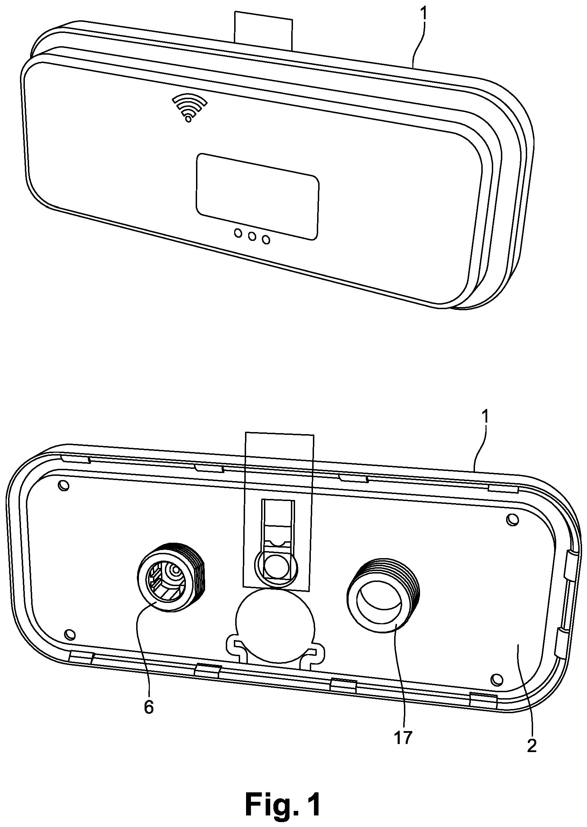

Figure 1 is a forward and backward perspective view of the device according to the invention.
Figure 2 is a view of the device according to the invention and of the adaptor to reefer's control units.
Figure 3 is a view of the external battery connected to the device according to the invention. Figure 3a presents a transverse view from one small side of the device, with the battery pack attached to the device. Figures 3b and 3c are views from two other sides of the battery pack.
Figure 4 is a detailed sectional view of the female part of the plug and play interface.
Figure 5 are perspective views of the male part of the plug and play interface. Figure 5a is a sectional view, and figure 5b and 5c are two other front views.
Figure 6 is a detailed sectional view of the male part of the plug and play interface with respect to plane A shown on figure 5.
Figure 7 is a sectional view of the device 1 with respect to a plane perpendicular to the plane supporting the mounting platform 2 shown on figure 1.
Figure 8 is a schematic view of a container monitored and tracked by a monitoring and tracking device and different external sensors.
Figure 9 is a perspective view of the male part of plug and play interface.

### DESCRIPTION OF INVENTION

Figure one is a general view of one embodiment of a monitoring and tracking device 1 according to the invention. The envelope of device 1 is made of a polycarbonate opaque, preferably.

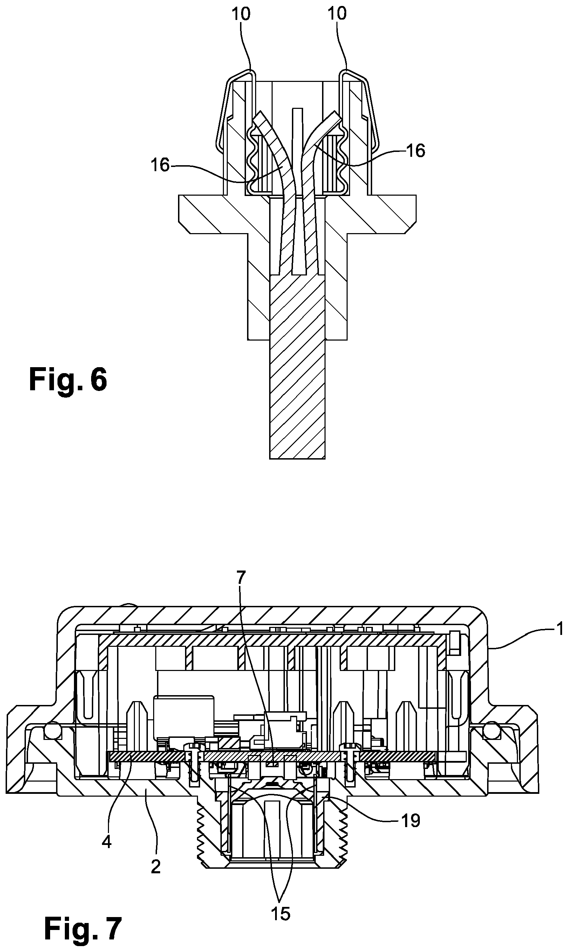

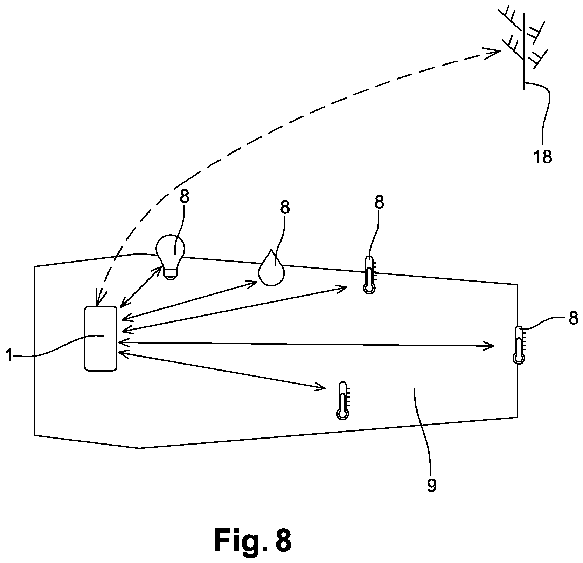

The device 1 comprises a mounting platform 2 forming the back of the device, and comprising a threaded opening lodging the female part 6 of the plug and play interface. As shown on figure 7, inside the device, just behind the plug and play interface, an electronic printed circuit 4 is fixed to the mounting platform. On the electronic printed circuit are mounted different components, among which are a processing unit, internal sensors managed by the processing unit, such as at least a GPS and a photoelectric cell, an internal battery, a GSM telecommunication means, and a specific wireless communication means with external sensors 8 installed on the asset 9 to be monitored and tracked by device 1, as represented on the schematic view of figure 8.

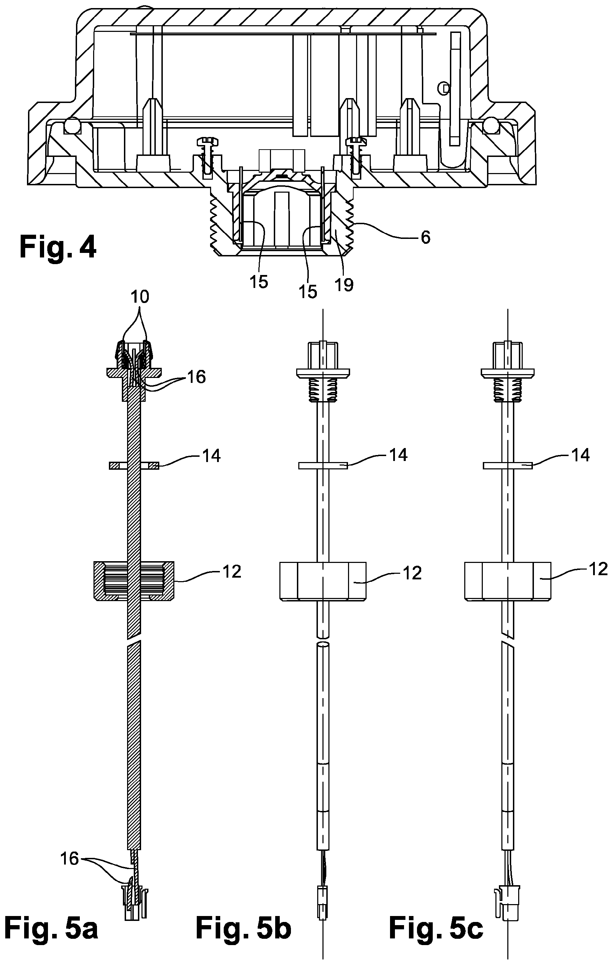

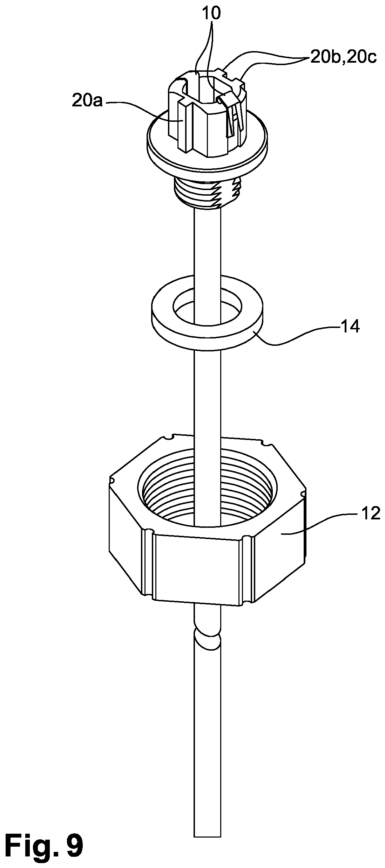

The plug and play interface is composed of a first female part 6 lodged inside the threaded opening fixed to the mounting platform 2 of the device 1. The plug and play interface is further composed of a second male part illustrated on figures 5 and 6, the male part being mechanically configured to cooperate with the female part so that electrical contact is established between contacts 10 on male part and contacts 15 on female part lodged inside the opening. For this purpose, at least three linear protrusions 20a, 20b, 20c are formed on the male part, as shown in figure 9, to cooperate with three complementary grooves formed on the female part of the interface.

All contacts are made in electrically conducting material protected against corrosion, preferably INOX316L. To improve conductivity, a layer of Nickel may be added on the surface of the contacts.

When the male part of the interface is plugged inside the female part, it is tightly maintained inside by a nut 12 configured to cooperate with the threaded cylindrical external envelope 6 of the female part as shown on figure 9. Appropriate seal 14 is provided to contribute to waterproof qualification of the device when the connector is plugged into the device's female interface. The male interface on the connector side and the connector itself are designed to be protected against corrosion.

Just behind the interface female part, in between the female contacts 15, a photoelectric cell is fixed on the printed circuit board 4. It is configured to detect the light that is switched on inside the container when the container's door is open, only when no interface male part is plugged in the interface female part of the device. It can also be used to detect the removal of a device peripheral (after it has been successfully connected and paired to the device). To achieve this purpose, all other sources of light must be masked from this sensor's field of view with some kind of opaque foam; also the printed circuit board 4 itself has been appropriately treated with opaque layers of iron to prevent circuit lights getting in the field of view of the sensor; further, portions of the female part of the plug and play interface that are in this sensor's field of view have been made transparent to light coming from outside of device 1 through the plug and play interface. In order to achieve this result, the internal surface 19 supporting the female contacts 15 of female interface 6 is made of transparent material, preferably a transparent polycarbonate.

Each of the two electrical male contacts 10 are welded to one electrical wire 16; this pair of wires 16 carry simultaneously both power current, AC or DC, and data. data transmission is preferably achieved using a half-duplex power-line communication (PCL) protocol behind a classic serial universal asynchronous receiver transmitter (UART) interface, modulating a 13.56 Mhz signal for high bit (1 logic) and low bit (0 logic) a 0V signal, at 57600 bps baudrate.

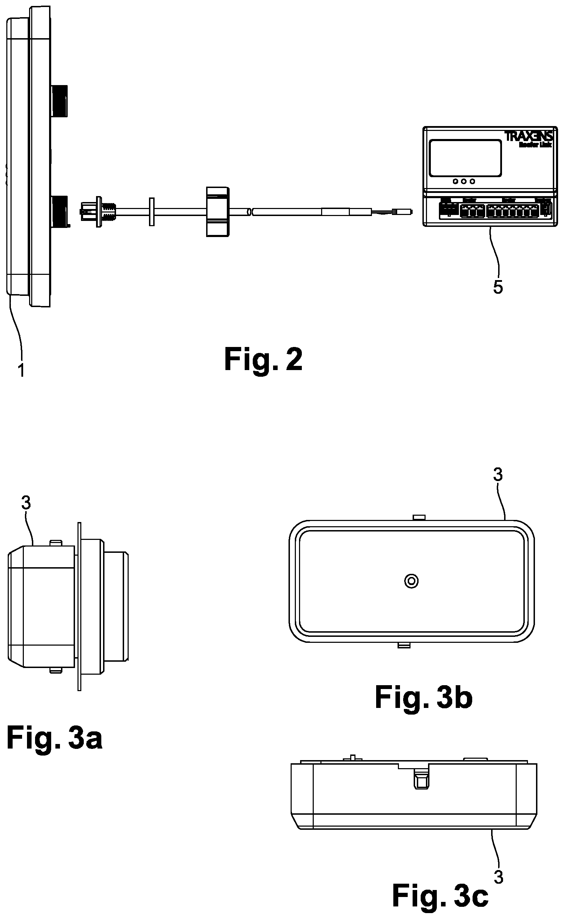

Simultaneously the pair of wires can provide up to 5W DC power to the device 1, either from a peripheral battery 3 (i.e. figure 3) or from a reefer's own power source through a peripheral adapter 5 (i.e. figure 2), both being connected to the device 1 through the same female contacts 15 (i.e. figure 4) and male contacts 10 (.i.e. figure 5 and 6) of the plug and play interface.

It is also the same plug and play interface communication protocol described above which enables either a peripheral battery 3 or a reefer's control unit peripheral adapter 5 to go through an identification process with the device 1 that enables both types of peripheral to be recognised before providing their specific functionalities (electrical power, and or status information) to the device.

By the same way the reefer's control unit adapter 5 enables the device 1 to connect to reefer's electrical power source, it also enables the device 1 to connect to any other electrical power source compatible, in voltage and intensity, with the device. Therefore the same plug and play interface may as well be used to connect the device 1, through the reefer's control unit peripheral adapter 5 as it has been described above, to any kind of electrical power generator, such as a genset, generating electrical power with voltage and intensity characteristics compatible with the device 1.

Moreover, the intelligence programmed in the device 1 enables the device 1 to recognize when the battery of the connected genset is being discharged or charged; thus, the device 1 is able to recognize whether the genset is running and generating power or whether it is at standstill. Hence, the reefer's control unit peripheral adapter 5 is one mode of realisation of an external control unit peripheral adapter that may be connected to the device 1 to interface device 1 with any other external power source, such as a genset.

A second threaded cylindrical bolt 17, similar to the envelope 6 of the female part of the plug and play interface, is attached to the mounting platform and is configured to cooperate with a nut to maintain the device 1 properly attached to any kind of asset.

The device 1 is configured to communicate wireless with a set of sensors 8 which are attached to the asset 9 and which form a sub-sensor network as illustrated in figure 8. A dedicated communication protocol is being implemented on the device's processing unit so that a first sensor registration process, or phase, has to be accomplished at the installation of the sensor on the asset before it becomes part of the sub-sensor network and can send sub-sensor network (SSN) messages to the device 1.

In order to start the registration phase both device 1 and sensor 1 have to be woken up. In order to wake up the device 1 the human operator approaches the sensor 8 close to the device so that a magnet inside the sensor triggers a magnetic switch in the device 1 which wakes up and enables an NFC module. Hence, the device reads the tag in the sensor containing its ID and registers it in its sensor internal list. The magnetic field generated by the device 1 wakes-up the sensor which finally powers its transmission module.

At this step of the registration process, the sensor does not yet know the mode to use to communicate with the device. Therefore a specific procedure is put in place to enable the sensor to join the SSN. Once obtained the ID of the new sensor 8, the device sends a specific frame to the sensor which has commuted to a sniffer mode. Once this frame is received by the sensor in sniffer mode, the sensor registers the communication mode and ID of the device 1 and is now ready to communicate with the device 1. All communications with the device are initiated by the device interrogation, and are transmitted with minimum transmission power, preferably - 10dBm. Different channels may be used to minimise interferences between different adjacent SSNs. Nevertheless in case of alarms, sensors can use a specific channel to immediately transmit appropriate message to the device without waiting for its interrogation.

SSN interrogation is the phase initiated by the device with a query message addressed successively to each registered SSN's sensor 8, which in turn answers with a data message containing the latest acquired data measured by the sensor 8. During the whole SSN interrogation, the radio module of the device 1 is forced in permanent listening to reduce the time needed to accomplish the entire process and the energy consumed by the sensors for data transmission.

## Claims

1. Device (1) designed for tracking and monitoring of a travelling asset, comprising a mounting platform (2) with a device plug and play interface (6, 15, 19), further comprising at least one processing unit, and at least one internal sensor (7) and a communication mean, said device being configured to collect environment parameters measured by said at least one internal sensor (7), said mounting platform being configured to maintain the device (1) attached to the asset, and said device plug and play interface (6,15,19) being configured to exchange data with and connect to electrical power source from or through at least one peripheral device (3, 5).

2. Device (1) according to previous claim, configured to implement an identification process with peripheral device to identify the peripheral device connected to device (1).

3. Device (1) according to previous claims in which the peripheral device can be either a peripheral battery (3) or a reefer's control unit peripheral adapter (5), or an external control unit peripheral adapter.

4. Device (1) according to previous claims in which the device plug and play interface (6,15,19) implements a communication protocol that uses electrical wiring to simultaneously carry both data and power current.

5. Device (1) according to previous claims in which the device is waterproof and the plug and play interface is protected against corrosion.

6. Device (1) according to previous claims in which the at least one internal sensor comprises a light sensor configured to detect light inside the asset through the device plug and play interface (6,15,19), when no peripheral device is connected to the device.

7. Device (1) according to previous claim 5 in which the device plug and play female interface comprises a transparent window.

8. Device (1) according to previous claims further collecting environment parameters measured by at least one external sensor (8), based on a pairing mechanism that links the at least one external sensor to the device using a wireless communication protocol comprising at least one wake-up phase and one registration phase followed by a phase of updating of registered sensor (8) data.

9. Device (1) according to previous claims, wherein the communication mean is a wireless telecommunication mean.

10. Peripheral device (3, 5) designed to cooperate with device (1) according to claims 1 to 9, comprising a peripheral's plug and play interface (10,16) configured to cooperate with the device's plug and play interface (6,15,19), and further configured to be protected against corrosion.

11. Peripheral device (3, 5) according to claim 10 further comprising a peripheral battery (3) configured to implement an identification process with the device (1) to which it is connected through peripheral's plug and play interface and device's plug and play interface, and delivering full electrical power to the device (1) through the same peripheral and device interface according to the result of the identification process.

12. Peripheral device (3, 5) according to claim 10 further comprising a peripheral adaptor (5) configured to implement an identification process with the device (1) to which it is connected through peripheral's plug and play interface and device's plug and play interface, and to cooperate with a reefer's control unit or with an external control unit according to the result of the identification process.

13. Peripheral device (3, 5) according to claim 12, in which cooperating with a reefer's control unit or with an external control unit comprises providing to the device (1) status data from reefer's control unit or from an external control unit, and providing to the device (1) reefer's electrical power source or an external power source.

14. Device (1) according to claims 3 to 9 connected to a peripheral device according to claim 12 or 13, configured to issue control commands to reefer's control unit according to the brand and type of reefer.

15. Device (1) according to claims 3 to 9 connected to a peripheral device according to claim 12 or 13, further comprising a cellular communication module to communicate data, said device being configured to select external power source when the cellular communication module is active.

16. Device (1) according to claims 3 to 9, connected to a peripheral device according to claim 13, configured to give priority to external power source over any other electrical power source.

17. Device (1) according to claims 3 to 9, connected to a peripheral device according to claim 12 or 13, configured to increase communication and reporting frequency after being connected to external power source.

18. Device plug and play interface for connecting a device according to claim 1 to 9 to a peripheral device according to claims 10 to 13, comprising a pair of electrical contacts (15) lodged inside a female part, configured to cooperate with electrical contacts attached to a male part when the male part is inserted into the female part, the male part being maintained inside by a nut (12) configured to cooperate with the threaded external envelope (6) of the female part.

19. Device plug and play interface according to claim 18 comprising a first female part having a first cylindrical threaded external envelope (6) with a first diameter and a first cylinder axis, and further comprising a second part having a second cylindrical threaded external envelope with a second diameter and a second cylinder axis, the first and the second cylinder axis being having identical extension directions and being separated by a given distance.

20. Device plug and play interface according to claim 19 wherein the first and the second diameter are comprised between 24 mm and 27 mm, and wherein the given distance is comprised between 79 mm and 81 mm.
